**Europäisches Patentamt**

**European Patent Office**

**Office européen des brevets**

(11) Veröffentlichungsnummer: **0 276 657**
**B1**

(12) **EUROPÄISCHE PATENTSCHRIFT**

(45) Veröffentlichungstag der Patentschrift:
05.09.90

(51) Int. Cl.⁵: **C09D 109/00**, C09D 7/00

(21) Anmeldenummer: **88100142.4**

(22) Anmeldetag: **08.01.88**

(54) **Reaktivverdünner für Beschichtungsmittel auf Basis von Polybutadien.**

(30) Priorität: **20.01.87 DE 3701410**

(43) Veröffentlichungstag der Anmeldung:
**03.08.88 Patentblatt 88/31**

(45) Bekanntmachung des Hinweises auf die Patenterteilung:
**05.09.90 Patentblatt 90/36**

(84) Benannte Vertragsstaaten:
**AT BE DE ES FR GB IT NL**

(56) Entgegenhaltungen:
**EP-A- 0 209 823**
**US-A- 3 025 258**
**US-A- 4 343 925**

(73) Patentinhaber: **BAYER AG,**
**D-5090 Leverkusen 1 Bayerwerk(DE)**

(72) Erfinder: **Höhlein, Peter, Dr., Windmühlenweg 3e,**
**D-4152 Kempen 3(DE)**
Erfinder: **Wellner, Wolfgang, Dr., Bachstrasse 1,**
**D-5060 Bergisch-Gladbach 2(DE)**

## Beschreibung

Die Erfindung betrifft die Verwendung Ester- und Ethergruppen enthaltender Polyhydroxylverbindungen als Reaktivverdünner für Beschichtungsmittel, die als Bindemittel Polybutadienöl enthalten.

Unter "Reaktivverdünner" versteht man niedrigviskose Flüssigkeiten, die harzartige Bindemittel verdünnen und dadurch dem Beschichtungsmittel die zu seiner Applikation notwendige Viskosität verleihen, zur Reaktion mit dem Bindemittel befähigte funktionelle Gruppen enthalten und beim Härtungsvorgang zum überwiegenden Teil – jeweils abhängig von ihrer Flüchtigkeit – Bestandteil der gehärteten Beschichtung werden.

So betrifft beispielsweise die US-A 4 343 925 Beschichtungsmittel auf Basis von Polyesterpolyolen und geeigneten Vernetzungsmitteln, die bestimmte Estergruppen aufweisende Reaktivverdünner enthalten.

Aufgabe der Erfindung war es, Reaktivverdünner aufzufinden, wodurch Reaktivverdünner-haltige Beschichtungssysteme auf Polybutadienbasis zugänglich werden sollten, die unter Ausbildung einwandfreier Beschichtungen in praxisgerechten Zeiten aushärten und keine oder nur geringe Mengen organischer Lösungsmittel, die nicht als Reaktivverdünner wirken, benötigen.

Überraschenderweise wurde gefunden, daß sich Veresterungsprodukte aus Ethergruppen-haltigen Polyolen und ungesättigten Monocarbonsäuren hervorragend als Reaktivverdünner für Beschichtungsmittel auf Polybutadienbasis eignen.

Die eigene ältere, jedoch nicht vorveröffentlichte EP-A 0 209 823 beschreibt zwar bereits Ether- und Estergruppen aufweisende Polyhydroxylverbindungen, die den nachstehend näher beschriebenen erfindungsgemäßen Reaktivverdünnern weitgehend entsprechen, jedoch werden diese Verbindungen gemäß älterer Patentanmeldung als Aufbaukomponente bei der Herstellung von Polyurethankunststoffen und nicht als Reaktivverdünner für Beschichtungsmittel auf Basis von Polybutadienharzen verwendet.

Die US-A 3 025 258 befaßt sich ihrerseits zwar mit Beschichtungsmitteln auf Basis von Polybutadienharzen jedoch ausschließlich in Kombination mit ganz speziellen Additiven, nämlich bestimmten Aluminatestern, die als Korrosionsinhibitoren bei der Verwendung der Beschichtungsmittel zur Metallackierung wirken sollen.

Gegenstand der Erfindung ist die Verwendung von Veresterungsprodukten, erhältlich durch Umsetzung von

A. Polyolen mit einer Hydroxylzahl von 50 bis 1000, vorzugsweise 100 bis 800, die im Mittel mindestens 3, vorzugsweise 4 bis 8, Hydroxylgruppen pro Molekül und pro Hydroxylgruppe im Mittel 0,5 bis 15, vorzugsweise 1 bis 5, aber pro Molekül im Mittel insgesamt nicht mehr als 20 Ethergruppen enthalten, und

B. 0,05 bis 0,98, vorzugsweise 0,30 bis 0,90, Äquivalenten (bezogen auf Hydroxylgruppen von A) ungesättigter $C_6$-$C_{30}$-, vorzugsweise $C_8$-$C_{24}$-Monocarbonsäuren,

zu Verbindungen mit einer Säurezahl von maximal 5, einer Hydroxylzahl von 1 bis 400, vorzugsweise 3 bis 350, und einem mittleren Gehalt von 0,1 bis 4 Hydroxlgruppen pro Molekül

und gegebenenfalls weitere Umsetzung mit

C. bis zu äquivalenten Mengen reaktiver polyfunktioneller Verbindungen aus der Reihe Polycarbonsäuren, Polycarbonsäureanhydride und Polyisocyanate (wobei sich die Äquivalenz auf die Hydroxylgruppen des Reaktionsprodukts aus A und B einerseits und auf die reaktiven Gruppen der reaktiven Verbindungen C andererseits bezieht), als Reaktivverdünner für Beschichtungsmittel, die als Bindemittel Polybutadienöl enthalten.

Bevorzugte Polyole A sind Umsetzungsprodukte von I. als "Starter" eingesetzten Polyhydroxylverbindungen mit im Mittel mindestens 3, vorzugsweise 4 bis 8 Hydroxylgruppen und 3 bis 12 C-Atomen pro Molekül und II. Alkoxylierungsmitteln mit 2 bis 8, vorzugsweise 2 oder 3, C-Atomen pro Molekül.

Bevorzugte Starter A.I umfassen beispielsweise Glycerin, Trimethylolethan und -propan, Pentaerythrit, Sorbit, Mannit, Saccharose, Lactose, Sorbitan, α-Methylglycosit, α-Hydroxy-$C_1$-$C_4$-alkyl-glycosit, und Gemische dieser Verbindungen. Im Rahmen der anspruchsgemäß zulässigen mittleren Hydroxylfunktionalität können neben mindestens dreiwertigen Hydroxylverbindungen A.I auch Diole mit bis zu 8 C-Atomen, wie z.B. Wasser, Ethylenglykol, Propylenglykol, Butandiol-1,4, Diethylenglykol, Dipropylenglykol und deren Mischungen eingesetzt werden. So läßt sich beispielsweise aus Sorbit (Funktionalität = 6) oder Sorbitan (Funktionalität = 4) mit Ethylen- oder Propylenglykol oder Wasser (Funktionalität = 2) ein Startergemisch herstellen, dessen mittlere Hydroxylfunktionalität unter der der höherwertigen eingesetzten Polyole liegt, aber immer noch mindestens 3 beträgt.

Statt der Einstellung der Funktionalität der Polyole A durch Auswahl der bei der Alkoxylierung einzusetzenden Starter A.I ist es auch möglich, separat hergestellte Ethergruppen-haltige Polyole A unterschiedlicher Funktionalität und/oder Hydroxylzahl so miteinander zu mischen, daß sich die anspruchsgemäß geforderten Parameter ergeben.

Bevorzugte Alkoxylierungsmittel A.II umfassen beispielsweise $C_1$-$C_8$-Alkylenoxide wie Ethylenoxid, Propylenoxid, 1,2- und 2,3-Butylenoxid, Styroloxid und Gemische dieser Verbindungen. Besonders bevorzugte Alkoxylierungsmittel sind Ethylenoxid, Propylenoxid und deren Gemische.

Als ungesättigte Monocarbonsäuren B werden vorzugsweise ungesättigte aliphatische Monocarbonsäuren ausgewählt; besonders bevorzugt werden ungesättigte Fettsäuren mit einer Jodzahl von 70 bis 400 verwendet. Beispiele bevorzugter Monocarbonsäuren sind ungesättigte $C_{10}$-$C_{22}$-Fettsäuren wie Sojaölfettsäure, Ricinusölfettsäure, Linolsäure, Olivenölfettsäure, Erdnußölfettsäure, Safflorölfettsäure, Konjuvandolfettsäure, Ölsäure, Tallölfettsäure und deren Gemische. Über Art und Menge der ungesättigten Monocarbonsäuren läßt sich die Reaktivität der Veresterungsprodukte aus A, B und gegebenenfalls C steuern.

Die Veresterung der Reaktanden A und B kann auf an sich bekannte Weise bei 180 bis 260°C erfolgen und wird vorzugsweise so lange fortgesetzt, bis die Säurezahl auf 5 oder darunter gesunken ist. Die Viskosität liegt dann im allgemeinen zwischen 50 und 2000 mPa.s, gemessen im Hoeppler-Viskosimeter bei 20°C.

Beispiele bevorzugter reaktiver polyfunktioneller Verbindungen C sind aliphatische, cycloaliphatische gesättigte oder ungesättigte und/oder aromatische mehrbasische Carbonsäuren, vorzugsweise Di-, Tri- und Tetracarbonsäuren, mit 2 bis 14, vorzugsweise 4 bis 12 C-Atomen pro Molekül oder deren Anhydride, z.B. Phthalsäureanhydrid, Isophthalsäure, Terephthalsäure, Tetrahydro- und Hexahydrophthalsäureanhydrid, Endomethylentetrahydrophthalsäure, Bernsteinsäure, Glutarsäure, Sebacinsäure, Azelainsäure, Trimellithsäure und Trimellithsäureanhydrid und Pyromellithsäureanhydrid.

Bevorzugte reaktive polyfunktionelle Verbindungen C sind beispielsweise auch Polyisocyanate, insbesondere Diisocyanate mit 8 bis 16 C-Atomen, wie z.B. Hexamethylendiisocyanat, Toluylendiisocyanat, 4,4'-Diisocyanatodiphenylmethan, 4,4'-Diisocyanato-dicyclohexylmethan, 1-Isocyanato-3-isocyanatomethyl-3,5,5-trimethylcyclohexan ("Isophoron"-diisocyanat).

Polybutadienöle im Sinne der Erfindung sind Butadien-1,3-homopolymerisate sowie Copolymerisate des Butadiens-1,3 mit anderen mischpolymerisierbaren Verbindungen, wobei die Copolymerisate mindestens 50 Gew.-% ein kondensierte Reste des Butadiens-1,3 enthalten. "Andere mischpolymerisierbare Verbindungen" sind beispielsweise α-Methylstyrol, Vinylacetat und (Meth-)Acrylsäureester, vorzugsweise aber Styrol, Acrylnitril und deren Mischungen.

Die Polybutadienöle besitzen im allgemeinen als Zahlenmittel bestimmte Molekulargewichte von 500 bis 10 000, vorzugsweise von 800 bis 5000, und OH-Zahlen von 0 bis 200.

Bevorzugte Polybutadienöle sind Butadienhomopolymerisate. Die Homopolymeren des Butadiens können in zwei Strukturisomeren vorliegen, nämlich als 1,4-Polybutadien sowie als 1,2-Polybutadien. 1,4-Polybutadiene sind linear, unverzweigt und enthalten in der Hauptkette Doppelbindungen, die "cis" oder "trans" konfiguriert sein können. Die 1,2-Polybutadiene enthalten Seitengruppen mit einer vinylischen Doppelbindung.

Als 1,4-Polybutadiene sind 1,4-Polybutadiene mit mehr als 50 % cis-konfigurierten Doppelbindungen geeignet. Besonders geeignet sind derartige Produkte mit 70 bis 98 % cis-konfigurierten Doppelbindungen. Es ist bekannt, daß cis-1,4-Polybutadiene sehr gute Trocknungseigenschaften aufweisen, so daß diese Rohstoffe in den Fällen bevorzugt sind, in denen rasche Trocknung erwünscht ist.

Nach einer weiteren Ausführungsform der Erfindung können auch 1,4-Polybutadiene verwendet werden, die mehr als 50 % transständige Doppelbindungen aufweisen, z.B. Produkte mit 60 bis 98 % transständigen Doppelbindungen. Aufgrund der höheren Steifheit dieser Produkte wird der Fachmann trans-1,4-Polybutadiene insbesondere dann als Rohstoff wählen, wenn auf höhere Härte der Beschichtungen Wert gelegt wird.

Eine weitere Ausführungsform betrifft Poly-1,2-butadiene, also Materialien mit vinylischen Doppelbindungen. Ein sehr gut geeignetes Ausgangsmaterial ist dabei ein Produkt mit mehr als 80, vorzugsweise mehr als 90 % seitenständigen Doppelbindungen.

In der Mehrzahl der Fälle wird der Fachmann Isomerengemische von Polybutadienen einsetzen, also etwa 1,4-Polybutadiene mit 20 bis 70 % cis-ständigen Doppelbindungen und/oder 20 bis 50 % transständigen Doppelbindungen, die daneben auch noch Seitengruppen mit vinylischen Doppelbindungen aufweisen können. Bezüglich der Herstellbarkeit von Polybutadienen mit unterschiedlicher Konfiguration sei beispielsweise auf die Monographie "Makromoleküle" von H.G. Elias, 4. Auflage, Hüthig und Wepf-Verlag, Basel, Heidelberg, New York, Seiten 676 (Konfigurationsänderung "cis" zu "trans") sowie S. 744 bis 746 und 1012 ff, verwiesen.

Übliche Modifizierungen der Polybutadienöle, wie Funktionalisierung über Comonomere, wie z.B. Hydroxyethyl(meth)acrylat, oder Epoxidierung können, falls zweckmäßig, vorgenommen werden.

Die erfindungsgemäß zu verwendenden Veresterungsprodukte aus A, B und gegebenenfalls C werden den Polybutadienölen in der Regel in Mengen von 10 bis 95, vorzugsweise 20 bis 60, Gew.-%, bezogen auf die Summe von Polybutadienöl und Reaktivverdünner, zugesetzt. Der Gehalt organischer Lösungsmittel, die nicht als Reaktivverdünner wirken (beim Härten also nicht in der Beschichtung verbleiben), kann durch die erfindungsgemäß zu verwendenden Reativverdünner deutlich gesenkt oder gar völlig vermieden werden.

Die Herstellung der Beschichtungsmittel aus Polybutadienöl und Veresterungsprodukt aus den Komponenten A, B und gegebenenfalls C kann nach verschiedenen Methoden erfolgen:

A) Zusammengeben von

1. Polybutadienöl und
2. Veresterungsprodukt aus A, B und gegebenenfalls C;

Homogenisieren bei erhöhter Temperatur oder - vorzugsweise - bei Raumtemperatur.

B) Zusammengeben von

1. Polybutadienöl,
2. Veresterungsprodukt aus A und B und
3. reaktiver polyfunktioneller Verbindung C;

Umsetzung bei Raumtemperatur oder - vorzugsweise - erhöhter Temperatur (so daß das Veresterungsprodukt mit der reaktiven Verbindung C reagiert).

C) Zusammengeben von

1. Polybutadienöl,
2. Polyol A,
3. Monocarbonsäure B und gegebenenfalls
4. reaktiver polyfunktioneller Verbindung C;

Umsetzung bei erhöhter Temperatur (so daß die Komponnten A, B und - soweit vorhanden - C miteinander reagieren).
Methode C wird besonders bevorzugt.
Übliche Zusätze, die zur Herstellung der Beschichtungsmittel mitverwendet werden können, sind z.B. organische Lösungsmittel, die nicht als Reaktivverdünner wirken, Sikkative, Verlaufsmittel, Hautverhinderungsmittel, Antischaummittel, viskositätsregulierende Stoffe, Pigmente, Farbstoffe, Härtungskatalysatoren, UV-Absorber, Stabilisatoren gegen thermischen bzw. oxidativen Abbau, usw.
Bevorzugte organische Lösungsmittel sind z.B. einwertige Alkohole wie Methanol, Ethanol, Isopropanol, Carbonsäurealkyleaster wie Essigsäureethyl- und -butylester, Etheralkohole wie Propylenglykolmonoethylether, Etherester wie Propylglykolacetat, Ketone wie Methylethylketon, Methylisobutylketon, Cyclohexanon, Aromaten wie Toluol, Xylol und aliphatische Kohlenwasserstoffe wie verschiedene Benzinfraktionen.
Die organischen Lösungsmittel werden vorzugsweise in Mengen unter 20, insbesondere unter 10, Gew.-%, bezogen auf Polybutadien und Reaktivverdünner, eingesetzt. Besonders gerne verzichtet man auf organische Lösungsmittel vollständig.
Die Beschichtungsmittel können für Substrate aller Art wie Holz, Kunststoffe, Leder, Textilien, Glas, Keramik, Metall, dienen. Sie lassen sich mit den üblichen Applikationsmethoden wie Spritzen, Streichen, Fluten, Gießen, Tauchen, Walzen aufbringen. Die Mengen werden im allgemeinen so gewählt, daß Trockenfilmdicken der Beschichtungen (nach der Härtung) von 0,005 bis 0,10 mm resultieren.
Die Beschichtungsmittel können in Form von Klarlacken als auch in Form pigmentierter Lacke verwendet werden. Sie können lösungsmittelfrei eingesetzt werden, führen zu Filmen mit schneller An- und Durchtrocknung und ergeben nach Härtung bei Temperaturen von 0 bis 130°C, vorzugsweise bei Raumtemperatur, Beschichtungen mit runzelfreien Oberflächen.
Die in den nachfolgenden Beispielen genannten Prozentangaben beziehen sich auf das Gewicht; Teile bedeuten Gewichtsteile.

Beispiele

Herstellung der Reaktivverdünner

(am Beispiel des Reaktivverdünners A)

In einem mit Rührer, Heizung, Stickstoffeinleitungsrohr, Kolonne und Wasserabgang ausgestatteten 5 l-Rührkessel werden 2468 g Sojaölfettsäure und 1690 g eines propoxylierten Sorbits mit einer Hydroxylzahl von 425 und einem Äquivalentgewicht von 125 unter Durchleiten von 2 bis 3 l Stickstoff/Stunde eingewogen. Anschließend wurde innerhalb von 3 Stunden auf 200°C aufgeheizt, wobei die am Kolonnenkopf gemessene Temperatur 105°C nicht überschritt. Sobald eine Sumpftemperatur von 200°C erreicht war und die Temperatur am Kolonnenkopf 90°C unterschritt, wurde zuerst die Kolonne entfernt und dann der Stickstoffstrom auf 10 bis 12 l/Stunde erhöht. Als eine Säurezahl von 1,7 erreicht war, wurde auf 100°C abgekühlt und das Produkt über ein Gewebefilter filtriert: Es resultiert eine Flüssigkeit mit einer OH-Zahl von 62, einer Jodfarbzahl von 3 und einer Viskosität von 268 mPa.s bei 23°C.
Die Reaktivverdünner B bis E wurden analog hergestellt (s. Tabelle I).

4

## Tabelle I

| Reaktiv-verdünner | Säure Menge/Art | propoxyliertes Polyol Menge/Art | OH-Zahl | ÄG[3] | Säure-zahl | OH-Zahl | JFZ[4] | Viskosität (mPa.s) bei 23°C |
|---|---|---|---|---|---|---|---|---|
| A | 2468 Soja | 1690 Sorbit[1] | 425 | 125 | 1,7 | 62 | 3 | 268 |
| B[2] | wie A | wie A | 425 | 125 | 7,1 | 53 | 7 | 1531 |
| C | 2468 Konju-vandol 50[5] | 1690 Sorbit[1] | 425 | 125 | 1,7 | 70 | 3 | 858 |
| D | 3226 Tall[6] | 908 Sorbit[1] 567 PG[7] | 425 515 | 125 109 | 4,2 | 22,6 | 8 | 168 |
| E | 3201 Soja | 1505 Sorbit/PG[7] (2:1)[8] | 475 | 118 | 1,7 | 25 | 6 | 167 |

[1] 90 %ige, wäßrige Lösung
[2] Reaktivverdünner A wurde durch Zusatz von 110,7 g Maleinsäureanhydrid bei 200°C weiterkondensiert.
[3] Äquivalentgewicht
[4] Jodfarbzahl
[5] Konjugierte, ungesättigte Fettsäure auf Pflanzenölbasis mit einem konjungierten Dienanteil zwischen 40 und 50 %.
[6] Tallölfettsäure
[7] Propylenglykol
[8] Molverhältnis

EP 0 276 657 B1

EP 0 276 657 B1

T a b e l l e  II

| Bei-spiel | Säure Menge/Art | propoxy-liertes Polyol Menge/Art | OH-Zahl | ÄG | Polybutadien Menge/Art | reaktive Komponente | Endprodukt | | | | |
|---|---|---|---|---|---|---|---|---|---|---|---|
| | | | | | | | Säure-Zahl | OH-Zahl | JFZ | Viskosi-(mPa.s) bei 20°C | Herstel-lungs-methode |
| 9 | 1206,8 Konjuvan-dol | 826,4 Sorbit | 425 | 125 | 2000 Polyöl 110[1) | 54 MSA[2) | 5,3 | 29 | 6 | 1268 | B |
| 10 | 200,6 Soja | 137,3 Sorbit | 425 | 125 | 325 Polyöl 130[4) | - | 1,3 | 33 | 5 | 1334 | C |
| 11 | 212,3 Soja | 145,3 Sorbit | 425 | 125 | 351,8 Polyöl 110[1) | - | 4,8 | 30 | 4 | 1260 | C |
| 12 | 231,4 Soja | 158,4 Sorbit | 425 | 125 | 375 Polyöl 110[1) | - | 0,5 | 29 | 5 | 550 | C |
| 13 | 200,6 Konju-vandol | 137,3 Sorbit | 425 | 125 | 325 Polyöl 130[4) | - | 0,8 | 34 | 3 | 1572 | C |
| 14 | 255,9 Tall | 72 Sorbit 45 PG | 425 515 | 125 109 | 325 Polyöl 110[1) | - | 2,1 | 11 | 5 | 1214 | C |

[1)  Polyöl 110 = Handelsprodukt der Fa. Hüls AG, stereospezifisches Polybutadien, Rn ⁻ 1500 mit
ca. 72 % 1,4-cis-Doppelbindungen,
ca. 27 % 1,4-trans-Doppelbindungen und
ca.  1 % Vinyl-Doppelbindungen
[2)  Maleinsäureanhydrid
[3)  Toluylendiisocyanat
[4)  Polyöl 130 = Handelsprodukt der Fa. Hüls AG, stereospezifisches Polybutadien Rn ⁻ 3000 mit
ca. 80 % 1,4-cis-Doppelbindungen und
ca.  1 % Vinyl-Doppelbindungen.

Herstellen von Klarlacken

Durch ausschließliche Zugabe von Trockenstoffen wurden die lösungsmittelfreien Bindemittel der Beispiele mit Viskositäten entsprechend einer Auslaufzeit von 120 sec (gemessen nach DIN 53 211 im DIN-Becher 4) auf Glasplatten mit einer Naßfilmdicke von ca. 60 µm aufgetragen. Als Trockenstoffe wurden Cobaltoctoat, Bleioctoat und Calciumoctoat verwendet. Die auf den Feststoffgehalt bezogenen Metallgehalte betrugen 0,04 % Cobalt, 0,4 % Blei und 0,1 % Calcium. Nach 48 Stunden lagen durchgehärtete Lackfilme vor, die nach weniger als 6 Stunden klebfreie Filmoberflächen besaßen.

**Patentansprüche**

1. Verwendung von Veresterungsprodukten, erhältlich durch Umsetzung von
A. Polyolen mit einer Hydroxylzahl von 50 bis 1000, die im Mittel mindestens 3 Hydroxylgruppen pro Molekül und pro Hydroxylgruppe im Mittel 0,5 bis 15, aber pro Molekül im Mittel insgesamt nicht mehr als 20 Ethergruppen enthalten, und
B. 0,05 bis 0,98 Äquivalenten (bezogen auf Hydroxylgruppen von A) ungesättigter C6-C30-Monocarbonsäuren
zu Verbindungen mit einer Säurezahl von maximal 5, einer Hydroxylzahl von 1 bis 400 und einem mittleren Gehalt von 0,1 bis 4 Hydroxylgruppen pro Molekül
und gegebenenfalls weitere Umsetzung mit
C. bis zu äquivalenten Mengen reaktiver polyfunktioneller Verbindungen aus der Reihe Polycarbonsäuren, Polycarbonsäureanhydride und Polyisocyanate (wobei sich die Äquivalenz auf die Hydroxylgruppen des Reaktionsprodukts aus A und B einerseits und auf die reaktiven Gruppen der reaktiven Verbindungen C andererseits bezieht),
als Reaktivverdünner für Beschichtungsmittel, die als Bindemittel Polybutadienöl enthalten.
2. Verwendung nach Anspruch 1, wobei die Polyole A im Mittel 4 bis 8 Hydroxylgruppen pro Molekül enthalten.
3. Verwendung nach Ansprüchen 1 und 2, wobei die Polyole A pro Hydroxylgruppe im Mittel 1 bis 5 Ethergruppen enthalten.
4. Verwendung nach Ansprüchen 1 bis 3, wobei die Polyole A eine Hydroxylzahl von 100 bis 800 besitzen.
5. Verwendung nach Ansprüchen 1 - 4, wobei Veresterungsprodukte von 0,30 bis 0,90 Äquivalenten (bezogen auf Hydroxylgruppen von A) C6-C30-Monocarbonsäuren verwendet werden.
6. Verwendung nach Ansprüchen 1 - 5, wobei die Monocarbonsäuren B 8 bis 24 C-Atome pro Molekül besitzen.
7. Verwendung nach Ansprüchen 1-6, wobei die Monocarbonsäuren 10 bis 22 C-Atome pro Molekül enthalten.
8. Verwendung nach Ansprüchen 1 - 7 mit der Maßgabe, daß die Veresterungsprodukte eine Hydroxylzahl von 3 bis 350 aufweisen.
9. Verwendung nach Ansprüchen 1 bis 8 mit der Maßgabe, daß die Veresterungsprodukte aus den Komponenten A, B und gegebenenfalls C in Gegenwart des Polybutadienöls hergestellt werden.

**Claims**

1. The use of esterification products obtainable by reaction of
a. polyols having a hydroxyl value of 50 to 1,000 which contain an average of at least 3 hydroxyl groups per molecule and an average of 0.5 to 15 ether groups per hydroxyl group and an average of, in all, no more than 20 ether groups per molecule and
b. 0.05 to 0.98 equivalents (based on hydroxyl groups of A) unsaturated C6-30 monocarboxylic acids to form compounds having an acid value of at most 5, a hydroxyl value of 1 to 400 and an average content of 0.1 to 4 hydroxyl groups per molecule and, optionally, further reaction with
c. up to equivalent quantities of reactive polyfunctional compounds from the series comprising polycarboxylic acids, polycarboxylic anhydrides and polyisocyanates (the equivalents being based on the hydroxyl groups of the reaction product of A and B on the one hand and on the reactive groups of the reactive compounds C on the other hand),
as a reactive thinner for coating compounds containing polybutadiene oil as binder.
2. The use claimed in claim 1, the polyols A containing an average of 4 to 8 hydroxyl groups per molecule.
3. The use claimed in claims 1 and 2, the polyols A containing an average of 1 to 5 ether groups per hydroxyl group.
4. The use claimed in claims 1 to 3, the polyols A having a hydroxyl value of 100 to 800.
5. The use claimed in claims 1 to 4, esterification products of 0.30 to 0.90 equivalents (based on hydroxyl groups of A) C6-30 monocarboxylic acids being used.
6. The use claimed in claims 1 to 5, the moncarboxylic acids B containing 8 to 24 C atoms per molecule.
7. The use claimed in claims 1 to 6, the monocarboxylic acids containing 10 to 22 C atoms per molecule.

8. The use claimed in claims 1 to 7 with the proviso that the esterification products have a hydroxyl value of 3 to 350.

9. The use claimed in claims 1 to 8 with the proviso that the esterification products are prepared from components A, B and optionally C in presence of the polybutadiene oil.

**Revendications**

1. Utilisation de produits d'estérification obtenus par réaction de:

a) des polyols d'indice d'hydroxyle 50 à 1 000, contenant en moyenne au moins trois groupes hydroxy par molécule et en moyenne 0,5 à 15 groupes éther par groupe hydroxy mais en moyenne au total pas plus de 20 groupes éther par molécule, et

b) 0,05 à 0,98 équivalent (par rapport aux groupes hydroxy de A) d'acides monocarboxyliques insaturés en $C_6$-$C_{30}$, aveo formation de composés d'indice d'acide 5 au maximum, d'indice d'hydroxyle 1 à 400, à une teneur moyenne de 0,1 à 4 groupes hydroxy par molécule qu'on fait le cas échéant réagir ensuite avec:

c) des quantités allant jusqu'aux quantités équivalentes de composés polyfonctionnels réactifs de la classe des acides polycarboxyliques, des anhydrides d'acides polycarboxyliques et des polyisocyanates (l'équivalence se rapportant d'une part aux groupes hydroxy du produit de réaction de A et B et d'autre part aux groupes réactifs des composés réactifs C), en tant que diluants réactifs pour des produits de revêtement dont le liant consiste en huile de polybutadiène.

2. Utilisation selon la revendication 1, dans laquelle les polyols A contiennent en moyenne de 4 à 8 groupes hydroxy par molécule.

3. Utilisation selon les revendications 1 et 2, dans laquelle les polyols A contiennent en moyenne de 1 à 5 groupes éther par groupe hydroxy.

4. Utilisation selon les revendications 1 à 3, dans laquelle les polyols A ont un indice d'hydroxyle de 100 à 800.

5. Utilisation selon les revendications 1 à 4, dans laquelle on utilise des produits d'estérification de 0,30 à 0,90 équivalent (par rapport aux groupes hydroxy de A) d'acides monocarboxyliques en $C_6$-$C_{30}$.

6. Utilisation selon les revendications 1 à 5, dans laquelle les acides monocarboxyliques B contiennent de 8 à 24 atomes de carbone par molécule.

7. Utilisation selon les revendications 1 à 6, dans laquelle les acides monocarboxyliques contiennent de 10 à 22 atomes de carbone par molécule.

8. Utilisation selon les revendications 1 à 7, dans laquelle les produits d'extérification ont un indice d'hydroxyle de 3 à 350.

9. Utilisation selon les revendications 1 à 8, dans laquelle les produits d'estérification des composants A, B et éventuellement C sont préparés en présence de l'huile de polybutadiène.